# EUROPÄISCHE PATENTSCHRIFT

(11) **EP 1 034 998 B1**
(45) Veröffentlichungstag und Bekanntmachung des Hinweises auf die Patenterteilung: **21.01.2004**
(21) Anmeldenummer: 00890061.5
(22) Anmeldetag: 29.02.2000
(51) Int. Cl.: B61D 19/00, E05D 15/10

(54) **Obere Ausstellvorrichtung für eine Schiebewand**
Upper displacement device for sliding sides
Dispositif supérieur de deplacement pour parois coulissantes

(30) Priorität: 12.03.1999 AT 44899
(43) Veröffentlichungstag der Anmeldung: 13.09.2000
(73) Patentinhaber: Siemens SGP Verkehrstechnik GmbH, 1110 Wien (AT)
(72) Erfinder: Schoberegger, Michael, 8811 Scheifling (AT)
(74) Vertreter: Matschnig, Franz, Dipl.-Ing.

(56) Entgegenhaltungen:
- EP-A1- 0 291 564
- DE-A- 2 003 857

## Beschreibung

Die Erfindung betrifft eine obere Ausstellvorrichtung für eine Schiebewand, die über wenigstens zwei Rollen in einer Führungsschiene aus ihrer Schließstellung bzw. in ihre Schließstellung geführt ist, wobei im Bereich jeder Rolle in der Schließstellung der Schiebewand ein Parallelogrammgestänge vorgesehen ist, das aus zwei Schwenkhebeln besteht.

Aus der DE 30 49 189 A1 ist eine in einer Führungsschiene verschiebbare Schiebetür bekannt, wobei die Führungsschiene mittels zweier paralleler Lenker zwischen einer Schließ- und Offenstellung verschwenkbar ist. In der Offenstellung der Führungsschiene ist die Schiebetür mittels eines Rollenwagengestells in der Führungsschiene verschiebbar. Ein Problem bei dieser Anordnung ist, daß in der Offenstellung, insbesondere bei vollständig geöffneter Tür, durch das Überhängen des Türflügels starke Kräfte auf die Führungsschiene wirken.

Die DE 2 019 632 A zeigt eine zweiteilige Schiebetür, wobei eine Tür nach einem nach Außen schwenken über die andere Tür verschoben werden kann. Die Tür wird dabei mittels zweier paralleler Schwenkhebel, die in einer im wesentlichen horizontalen Ebene verschwenkbar und unmittelbar an in einer Schiene geführten Rollen befestigt sind, nach Außen geschwenkt.

Ein Problem, das bei den genannten, aber auch bei anderen bekannten Ausstellvorrichtungen auftritt, ist, daß die Forderung nach einer exakten, vollständigen Führung der Schiebewand aus ihrer Schließstellung bzw. in ihre Schließstellung, die überdies möglichst reibungsarm erfolgen soll, nur unzureichend erfüllt ist.

Der Erfindung liegt daher die Aufgabe zu Grunde, die erwähnten Probleme zu vermeiden bzw. die genannten Bedürfnisse in besserer Weise zu befriedigen.

Die gestellte Aufgabe wird mit einer Ausstellvorrichtung nach Anspruch 1 gelöst.

Auf diese Weise wird eine exakte, vollständige Führung der Schiebewand erzielt, die praktisch verschleißfrei ist. Ein weiterer Vorteil liegt darin, dass an der Schiebewand und/oder deren Rahmen angeordnete Dichtungen keinerlei Reibung unterworfen sind.

In vorteilhafter weiterer Ausgestaltung der Erfindung kann jede Rolle eine im wesentlichen lotrechte Achse aufweisen und die Führungsschiene sowie die Halterung jeweils zwei zu dieser Achse parallele Stege, vorzugsweise U-förmigen Querschnitt aufweisen. Besitzen Halterung und/oder Führungsschiene U-förmigen Querschnitt, so wird zugleich eine Sicherung der Schiebewand gegen Ausheben erreicht.

Von Vorteil ist weiters, wenn das Parallelogrammgestänge in der angehobenen Lage an einem Anschlag anschlägt. Auf diese Weise ist die angehobene Lage des Parallelogrammgestänges genau definiert.

Dabei kann der Anschlag die Welle sein, wodurch sich die Konstruktion vereinfacht.

Vorteilhaft ist ferner, wenn an den Enden der Halterung je ein Schieber vorgesehen ist, der mittels einer Feder in eine das Ende der Halterung verschließenden Stellung gehalten und durch Anschlagen an die Führungsschiene in seine Offenstellung verschiebbar ist. Auf diese Weise ist ein Verschieben der Schiebewand vor Erreichen der angehobenen Lage des Parallelogrammgestänges und somit ein Ausspuren der Rollen aus der Halterung verhindert.

Ein weiterer Vorteil wird erzielt, wenn die Rollen paarweise vorgesehen sind und die Rollen sowie die ihnen zugeordneten Ausnehmungen in der Führungsschiene eines Paares unterschiedlichen gegenseitigen Abstand bezüglich jedes anderen Paares aufweisen. Bei dieser Ausgestaltung wird erreicht, daß beim Verschieben die Schiebewand stets von mehr als zwei Rollen geführt ist.

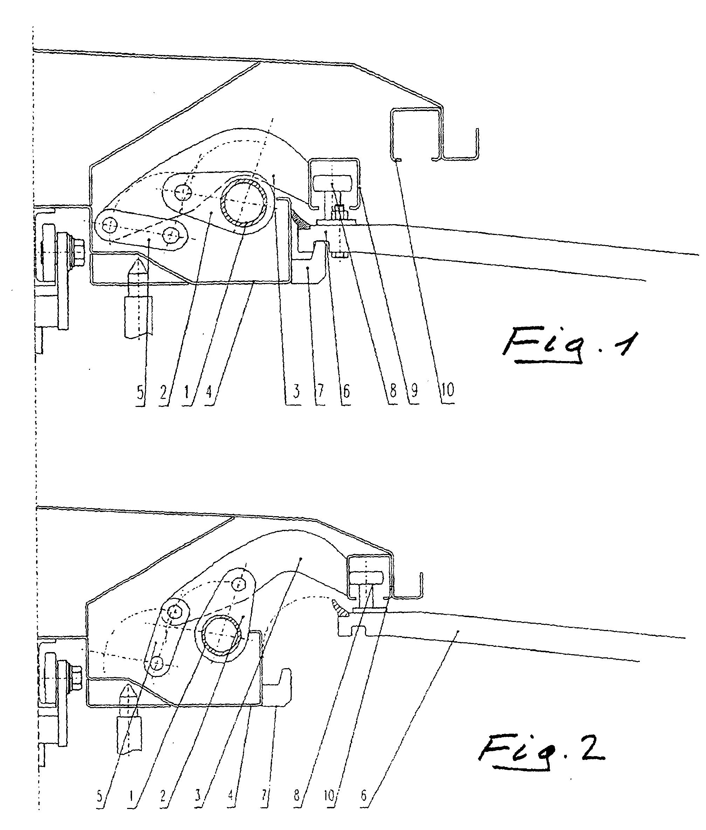

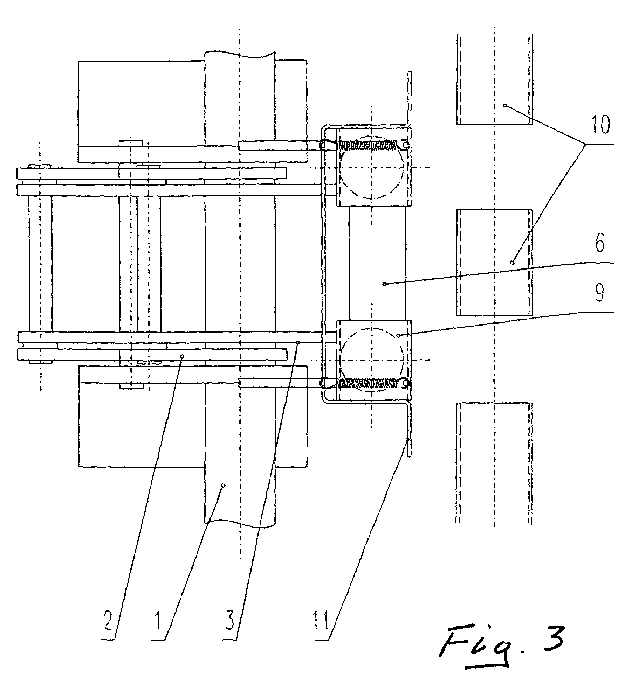

Die Erfindung wird im folgenden anhand eines bevorzugten Ausführungsbeispieles näher erläutert, das in den Zeichnungen dargestellt ist; es zeigen
■ Fig. 1 eine Ansicht der Ausstellvorrichtung bei geschlossener Schiebewand, wobei Teile des Parallelogrammgestänges in teilweise angehobener Lage mit strichlierten Linien angedeutet sind,
■ Fig. 2 die Ausstellvorrichtung bei geöffneter Schiebewand, wobei die Ausstellvorrichtung bei geschlossener Schiebewand mit strichlierten Linien eingezeichnet ist, und
■ Fig. 3 eine Draufsicht auf die Ausstellvorrichtung zur Darstellung der Schieber.

Gemäß Fig. 1 und 2 ist die Schiebewand 6 eines Güterwaggons während ihres Verschiebens mit Hilfe wenigstens zweier Rollen 8 in einer Führungsschiene 10 geführt (Fig. 2). Die Rollen 8 weisen eine im wesentlichen lotrechte Achse auf, um die Seitenkräfte optimal aufzunehmen. Die Führungsschiene 10 besitzt U-förmigen Querschnitt mit zwei im wesentlichen lotrechten Stegen und übergreift die Rollen 8. Im Bereich jeder Rolle 8 bei geschlossener Schiebewand 6 ist an einem Dachträger 4 des Güterwaggons ein Parallelogrammgestänge vorgesehen, das aus zwei Schwenkhebeln 2, 5 und einer Brücke 3 besteht. Einer der Schwenkhebel 2 ist mit einer Welle 1 fest verbunden, die allen Parallelogrammgestängen gemeinsam ist und bis zum Waggonende verläuft, wo sie an einen herkömmlichen Betätigungsmechanismus, wie eine Handradbetätigung, angeschlossen ist Dieser Betätigungsmechanismus ist mit einer unteren Ausstellvorrichtung gekoppelt.

Die Brücke 3 trägt an ihrem der Schiebewand 6 zugekehrten, freien Ende eine Halterung 9, die ebenfalls zwei zur Achse der Rollen 8 parallele Stege und zweckmäßigerweise denselben Querschnitt wie die Führungsschiene 10 aufweist.

Durch Betätigen des Betätigungsmechanismus wird die Welle 1 verdreht, hierdurch das Parallelogrammgestänge verschwenkt und die Brücke 3 angehoben sowie auswärts bewegt. Die Endlage des der Welle 1 benachbarten Schwenkhebels 2 ist durch Anschlagen desselben an der Welle 1 definiert. In dieser angehobenen sowie seitlich nach außen versetzten Lage der Schlebewand 6 fluchtet die Halterung 9 mit der Führungsschiene 10, die entlang dem Waggon durchgehend verläuft und an den den Parallelogrammgestängen entsprechenden Stellen Ausnehmungen aufweist.

Vorzugsweise sind die Rollen 8 paarweise vorgesehen, wobei die Rollen 8 sowie die ihnen zugeordneten Ausnehmungen in der Führungsschiene 10 eines Paares unterschiedlichen gegenseitigen Abstand bezüglich jedes anderen Paares aufweisen. Somit ist gewährleistet, daß beim Verfahren der Schiebewand 6 mehr als zwei Rollen 8 die Schiebewand 6 führen.

Gemäß Fig. 3 ist an den Enden der Halterung 9 je ein Schieber 11 angeordnet, der mittels einer Zugfeder 12 in seine das Ende der Halterung 9 verschließenden Stellung gehalten ist. Vorzugsweise sind die Schieber 11 über einen Verbindungssteg miteinander verbunden und mit einer nach außen abstehenden Nase versehen. Die Schieber 11 dienen dazu, ein Verschieben der Schiebewand 6 zu verhindern, bevor sich das Parallelogrammgestänge in seiner angehobenen Lage befindet. Kurz vor dem Ende der Schwenkbewegung des Parallelogrammgestänges in seine angehobene Lage schlagen die Nasen der Schieber 11 an der Führungsschiene 10 an, wodurch die Schieber 11 die Halterung 9 freigeben und die Rollen 8 aus der Halterung 9 in die Führungsschiene 10 gelangen können.

Die Schiebewand 6 ist während des Öffnens, Schließens und Verfahrens mittels des Quersteges der U-förmigen Halterung 9 sowie Führungsschiene 10 gegen Ausheben gesichert. Eine allfällige Lippendichtung am oberen freien Rand der Schiebewand 6 unterliegt keinerlei Reibungskräften.

Die Erfindung schafft somit eine obere Ausstellvorrichtung für eine Schiebewand oder Schiebetür, mit der dieselbe während des Öffnens und Schließens exakt und vollständig geführt ist. Infolge der Schwenkbewegung des Parallelogrammgestänges sind die Reibungskräfte auf ein Minimum, praktisch auf Null verringert. Vor allem sind Reibungen in Axialrichtung der Rollen zwischen Rollen und Führungsschiene vermieden.

## Patentansprüche

1. Obere Ausstellvorrichtung für eine Schiebewand (6), die über wenigstens zwei Rollen (8) in einer Führungsschiene (10) aus ihrer Schließstellung bzw. in ihre Schließstellung geführt ist, wobei im Bereich jeder Rolle (8) in der Schließstellung der Schiebewand (6) ein Parallelogrammgestänge vorgesehen ist, das aus zwei Schwenkhebeln (2, 5) besteht und aus einer abgesenkten in eine angehobene Lage verschwenkbar ist,
**dadurch gekennzeichnet, daß**
die beiden Schwenkhebel (2, 5) mittels einer Brücke (3) verbunden sind,
einer der Schwenkhebel (2) mit einer den Parallelogrammgestängen gemeinsamen Welle (1) fest verbunden ist,
und an das Parallelogrammgestänge eine Halterung (9) angeschlossen ist, die in der angehobenen Lage in eine Ausnehmung der Führungsschiene (10) eingreift sowie mit derselben im wesentlichen fluchtet und in der abgesenkten Lage in seitlichem Abstand von der Laufschiene liegt.

2. Ausstellvorrichtung nach Anspruch 1, **dadurch gekennzeichnet, daß** jede Rolle (8) eine im wesentlichen lotrechte Achse aufweist und die Führungsschiene (10) sowie die Halterung (9) jeweils zwei zu dieser Achse parallele Stege, vorzugsweise U-förmigen Querschnitt aufweisen.

3. Ausstellvorrichtung nach einem der Ansprüche 1 bist 2, **dadurch gekennzeichnet, daß** das Parallelogrammgestänge in der angehobenen Lage an einem Anschlag anschlägt.

4. Ausstellvorrichtung nach Anspruch 4, **dadurch gekennzeichnet, daß** der Anschlag die Welle (1) ist.

5. Ausstellvorrichtung nach einem der Ansprüche 1 bis 4, **dadurch gekennzeichnet, daß** an den Enden der Halterung (9) je ein Schieber (11) vorgesehen ist, der mittels einer Feder (12) in eine das Ende der Halterung (9) verschließenden Stellung gehalten und durch Anschlagen an die Führungsschiene (10) in seine Offenstellung verschiebbar ist (Fig. 3).

6. Ausstellvorrichtung nach einem der Ansprüche 1 bis 5, **dadurch gekennzeichnet, daß** die Rollen (8) paarweise vorgesehen sind und daß die Rollen (8) sowie die ihnen zugeordneten Ausnehmungen in der Führungsschiene (10) eines Paares unterschiedlichen gegenseitigen Abstand bezüglich jedes anderen Paares aufweisen.

## Claims

1. Top deflecting device for a sliding wall (6) which is guided over at least two rollers (8) in a guide rail (10) out of its closed position or into its closed position,wherein in the region of each roller (8) in the closed position of the sliding wall (6) there is provided a parallelogram rod assembly which consists of two pivot levers (2, 5) and can be pivoted out of a lowered into a raised position,
**characterised in that**,
the two pivot levers (2,5) are connected by means of a bridge (3), one of the pivot levers (2) is fixedly connected to a shaft (1) common to the parallelogram rod assemblies,
and connected to the parallelogram rod assembly is a holding device (9) which in the raised position engages in a recess of the guide rail (10) and is substanially flush therewith and in the lowered position lies at a lateral spaced disposition from the running rail.

2. Deflecting device as claimed in Claim 1, **characterised in that**, each roller (8) comprises a substantially perpendicular axis and the guide rail (10) and the holding device (9) each comprise two cross-pieces which lie in parallel with this axis and preferably have a U-shaped cross-section.

3. Deflecting device as claimed in any one of claims 1 to 2, **characterised in that** in the raised position the parallelogram rod assembly contacts against a stop.

4. Deflecting device as claimed in Claim 4, **characterised in that**, the stop is the shaft (1).

5. Deflecting device as claimed in any of the claims 1 to 4, **characterised in that**, each of the ends of the holding device (9) are provided with a slide (11) which is held by means of a spring (12) in a position closing the end of the holding device (9) and by virtue of stops can be displaced onto the guide rail (10) into its open position.

6. Deflecting device as claimed in any one of claims 1 to 5, **characterised in that** the rollers (8) are provided in pairs and that the rollers (8) and the recesses allocated to them in the guide rail (10) of one pair are at a different spaced disposition with respect to each of the other pair.

## Revendications

1. Dispositif supérieur de déplacement pour une paroi coulissante (6), qui est amenée à se déplacer à partir de sa position de fermeture ou est amenée dans sa position de fermeture à l'aide d'au moins deux galets (8) dans un rail de guidage (10), et dans lequel une tringlerie en forme de parallélogramme, qui est constituée de deux leviers pivotants (2, 5) et peut être amenée par pivotement depuis une position abaissée dans une position relevée, est prévue au niveau de chaque galet (8) lorsque la paroi coulissante (6) est dans la position fermée, **caractérisé en ce que**
les deux leviers pivotants (2, 5) sont reliés au moyen d'un étrier (3),
l'un des leviers pivotants (2) est relié rigidement par un arbre (1) commun aux tringleries en forme de parallélogrammes, et
à la tringlerie en forme de parallélogramme est raccordé un dispositif de retenue (9), qui, dans la position soulevée, s'engage dans un évidement du rail de guidage (10) et est essentiellement aligné avec ce rail et, dans la position abaissée, est situé à une certaine distance latérale du rail de roulement.

2. Dispositif de déplacement selon la revendication 1, **caractérisé en ce que** chaque galet (8) possède un axe essentiellement vertical et que le rail de guidage (10) ainsi que le dispositif de retenue (9) possède chacun deux barrettes parallèles à cet axe, et possédant de préférence une section transversale en forme de U.

3. Dispositif de déplacement selon l'une des revendications 1 et 2, **caractérisé en ce que** dans la position soulevée, la tringlerie en forme de parallélogramme s'appuie contre une butée.

4. Dispositif de déplacement selon la revendication 4, **caractérisé en ce que** la butée est constituée par l'arbre (1).

5. Dispositif de déplacement selon l'une des revendications 1 à 4, **caractérisé en ce qu'**il est prévu, à chacune des extrémités du dispositif de retenue (9) un poussoir (11), qui est retenu à l'aide d'un ressort (12) dans une position qui ferme l'extrémité du dispositif de retenue (9) et qui, par butée contre le rail de guidage, peut être amené dans sa position ouverte (figure 3).

6. Dispositif de déplacement selon l'une des revendications 1 à 5, **caractérisé en ce que** les galets (8) sont prévus par paires et que les galets (8) ainsi que des évidements, qui leur sont associés, dans le rail de guidage (10) d'une paire sont séparés par une distance mutuelle différente de celle séparant les galets de chaque autre paire.
